# EUROPEAN PATENT SPECIFICATION

(11) **EP 3 008 657 B1**
(45) Date of publication and mention of the grant of the patent: **09.08.2017**
(21) Application number: 14737080.3
(22) Date of filing: 04.06.2014
(51) Int. Cl.: H04L 29/08, G06F 21/10, H04L 9/08, G06F 9/455, G06F 21/60

(54) **METHOD AND SYSTEM OF PROVIDING STORAGE SERVICES IN MULTIPLE PUBLIC CLOUDS**
VERFAHREN UND SYSTEM ZUM BEREITSTELLEN VON SPEICHERDIENSTE IN MEHREREN ÖFFENTLICHEN CLOUDS
PROCÉDÉ ET SYSTÈME POUR METTRE À DISPOSITION DES SERVICES DE STOCKAGE DANS PLUSIEURS NUAGES PUBLIQUES

(30) Priority: 11.06.2013 US 201361833629 P; 18.10.2013 US 201314058041
(43) Date of publication of application: 20.04.2016
(73) Proprietor: Cisco Technology, Inc., San Jose, CA 95134 (US)
(72) Inventor: CHANG, David Wei-Shen, Milpitas, California 95035 (US); PATRA, Abhijit, Saratoga, California 95070 (US); EPSTEIN, Joseph Alan, Pleasanton, California 94566 (US); PUTHIYAPARAMBIL, Aravindh, San Francisco, California 94102 (US); DEBROY, Deep, Foster City, California 94404 (US); CIVILINI, Massimo, Redwood, California 94061 (US)
(74) Representative: Kazi, Ilya
(86) International application number: PCT/US2014/040932
(87) International publication number: WO 2014/200778

(56) References cited:
- EP-A1- 2 648 370
- EP-A1- 2 648 391
- EP-A2- 2 648 098
- WO-A1-2009/155574
- US-A1- 2013 283 364
- "5 Benefits of a Storage Gateway in the Cloud", , 25 July 2012 (2012-07-25), XP055141645, Retrieved from the Internet: URL:https://web.archive.org/web/2012072509 2619/http://blog.twinstrata.com/2012/07/10 /5-benefits-of-a-storage-gateway-in-the-cl oud/ [retrieved on 2014-09-19]
- Kirill Kolyshkin: "Virtualization in Linux", , 1 September 2006 (2006-09-01), XP055141648, Retrieved from the Internet: URL:https://web.archive.org/web/2007012020 5111/http://download.openvz.org/doc/openvz -intro.pdf [retrieved on 2014-09-19]

## Description

### CROSS-REFERENCE TO RELATED APPLICATION

This application claims the benefit of priority to U.S. Provisional Patent Application Serial No. 61/833,629, entitled "METHOD AND SYSTEM OF PROVIDING STORAGE SERVICES IN MULTIPLE PUBLIC CLOUDS" filed June 11, 2013.

### TECHNICAL FIELD

This disclosure relates in general to the field of communications and, more particularly, to a system and a method for providing storage services in a cloud computing environment.

### BACKGROUND

Cloud computing environments have been implemented to provide storage services to meet ever-growing data storage demands. Cloud storage generally provides storage hosted by a third party service provider, where storage can be purchased for use on an as-needed basis. This allows for expanding storage capacity without incurring costs associated with adding dedicated storage. Today, commercial storage clouds have demonstrated feasibility of cloud storage services, offering (almost) unlimited storage at very low prices yet with high availability. As cloud storage services continue to expand, there is a need for cloud storage service solutions that effectively mitigate risks, such as data security risks, involved in utilizing such services.

### SUMMARY

The invention provides a method, a logic and a system as defined in the appended claims.

### BRIEF DESCRIPTION OF DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified schematic block diagram illustrating a communication system for providing storage services in a cloud computing environment;
FIGURE 2 is a simplified block diagram illustrating example details of the communication system in accordance with an embodiment;
FIGURE 3 is a simplified block diagram illustrating example details of the communication system in accordance with another embodiment;
FIGURE 4 is a simplified block diagram illustrating example details of the communication system in accordance with yet another embodiment; and
FIGURE 5 is a simplified block diagram illustrating example details of the communication system in accordance with yet another embodiment;
FIGURE 6 is a simplified flow diagram illustrating example operations that can be associated with an embodiment of the communication system;
FIGURE 7 is a simplified flow diagram illustrating yet other example operations that can be associated with another embodiment of the communication system; and
FIGURE 8 is a simplified flow diagram illustrating yet other example operations that can be associated with yet another embodiment of the communication system.

### DETAILED DESCRIPTION OF EXAMPLE EMBODIMENTS

### OVERVIEW

A system and a method implement a cloud storage gateway configured to provide secure storage services in a hybrid cloud computing environment. An exemplary method includes implementing storage provisioning for a virtual machine in a hybrid cloud environment that includes an enterprise network in communication with a cloud. The enterprise network includes enterprise storage, and the cloud includes cloud storage. Such storage provisioning is implemented by deploying a cloud storage gateway in the cloud, wherein the cloud storage gateway facilitates secure migration of data associated with the virtual machine between enterprise storage and cloud storage. A nested virtual machine container can be deployed in the cloud, where the nested virtual machine container abstracts an interface that is transparent to a cloud infrastructure of the cloud (for example, in various implementations, transparent to a cloud-specific infrastructure and/or cloud-specific interface(s) exposed by a cloud provider (vendor) of the cloud). The cloud storage gateway can be executed as a virtual machine within the nested virtual machine container. The nested virtual machine container can abstract a hypervisor interface for executing the cloud storage gateway.

In various embodiments, facilitating secure migration of data between the enterprise storage and the cloud storage can include intercepting a cloud storage request from the virtual machine, converting the cloud storage request into a cloud storage message, encrypting data associated with the cloud storage message, and forwarding the cloud storage message and associated encrypted data to the cloud storage. In various embodiments, facilitating secure migration of data between the enterprise storage and the cloud storage can further include intercepting a cloud storage response message from the cloud storage, converting the cloud storage response message into a cloud storage response, decrypting data associated with the cloud storage response, and forwarding the cloud storage response and associated decrypted data to the virtual machine. In various embodiments, facilitating secure migration of data between the enterprise storage and the cloud storage can include providing a secure tunnel between the virtual machine and the cloud storage gateway in the cloud.

In various embodiments, a cloud storage gateway can be deployed in the enterprise network. The cloud storage gateways (respectively deployed in the enterprise network and the cloud) facilitate disaster recovery for the enterprise network. In various embodiments, a cloud storage gateway can be deployed in another cloud in communication with the cloud. The cloud storage gateways in such configuration can facilitate data migration between the clouds.

The virtual machine can be deployed in a nested virtual machine container in the cloud. The nested virtual machine container can abstract an interface that is transparent to a specific infrastructure and specific interface exposed by the cloud (for example, by a cloud provider of the cloud), such that the nested virtual machine container hides the cloud-specific infrastructure and cloud-specific interface(s) from the virtual machine. In various embodiments, the nested virtual machine container can directly attach storage to the virtual machine. The directly attached storage can be provisioned by the nested virtual machine container creating virtual machine storage (for example, via a cloud interface specific to the cloud), encrypting the virtual machine storage; and forwarding the encrypted virtual machine storage to cloud storage in the cloud.

### EXAMPLE EMBODIMENTS

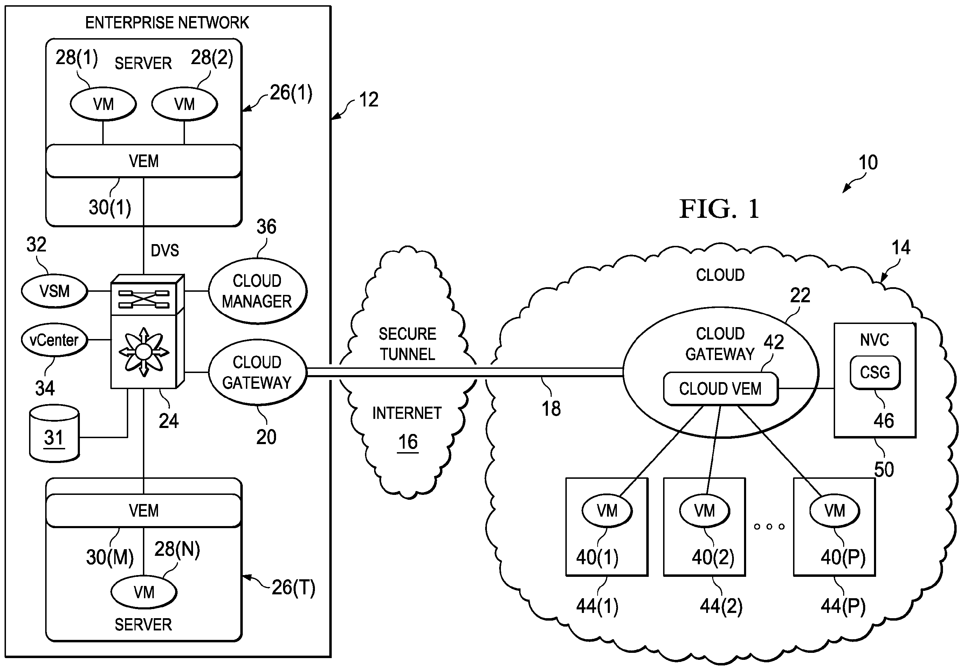

FIGURE 1 is a simplified schematic block diagram illustrating a communication system 10 for providing storage services in a cloud computing environment. In FIGURE 1, an enterprise network 12 communicates with a cloud 14 over a public network, such as Internet 16, via a secure tunnel 18. In various embodiments, enterprise network 12 and cloud 14 form a hybrid cloud network environment. Enterprise network 12 can be any private network, such as a data center network, operated and controlled by a particular entity or organization. Cloud 14 is a collection of hardware and software ("cloud infrastructure") forming a shared pool of configurable network resources (e.g., networks, servers, storage, applications, services, etc.) that can be suitably provisioned to provide on-demand self-service, network access, resource pooling, elasticity and measured service, among other features. In various embodiments, cloud 14 can be deployed as a private cloud (e.g., a cloud infrastructure operated by a single enterprise/organization), a community cloud (e.g., a cloud infrastructure shared by several organizations to support a specific community that has shared concerns), a public cloud (e.g., a cloud infrastructure made available to the general public), or a suitable combination of two or more disparate types of clouds. Cloud 14 can be managed by a cloud service provider, who can provide enterprise network 12 with access to cloud 14 and authorization to set up secure tunnel 18 in accordance, for example, with a predetermined service level agreement (SLA). In particular, network resources within cloud 14 are not controlled by the particular entity or organization controlling enterprise network 12; rather, the network resources are allocated to enterprise network 12 according to the SLA with the cloud service provider. For example, enterprise network 12 can sign up to use a fixed amount of central processing unit processors, storage, and network services provided by cloud 14.

Secure tunnel 18 can connect a cloud gateway 20 in enterprise network 12 with a corresponding cloud gateway 22 in cloud 14. In various embodiments, secure tunnel 18 is an L2 secure tunnel (implemented using Layer 2 tunneling protocol) that connects cloud resources at cloud 14 with enterprise network 12. Secure tunnel 18 can be configured to cope with corporate firewall and network address translation (NAT), for example, from the nature of the transport level protocols (e.g. UDP/TCP) and the transport layer ports opened for hypertext transfer protocol (HTTP)/hypertext transfer protocol secure (HTTPS) in the firewall.

In various embodiments, cloud gateway 20 is a virtual machine running in enterprise network 12, and cloud gateway 22 is a virtual machine running in cloud 14. Cloud gateway 20 can be responsible for establishing secure tunnel 18 for interconnecting enterprise network 12 (including components and resources within enterprise network 12) with cloud gateway 22. Cloud gateway 22 can also be responsible for establishing secure tunnel 18 for interconnecting cloud 14 (including components and resources within cloud 14) with cloud gateway 20. Cloud gateway 20 and/or cloud gateway 22 can be implemented on servers, switches, or other network elements. As used herein, the term "network element" is meant to encompass computers, network appliances, servers, routers, switches, gateways, bridges, load balancers, firewalls, processors, modules, or any other suitable device, component, element, or object operable to exchange information in a network environment. Moreover, the network elements may include any suitable hardware, software, components, modules, interfaces, or objects that facilitate the operations thereof. This may be inclusive of appropriate algorithms and communication protocols that allow for the effective exchange of data or information.

In various embodiments, cloud gateway 20 can communicate with distributed virtual switches, such as a distributed virtual switch (DVS) 24 provisioned in enterprise network 12. DVS 24 can span servers 26(1)-26(T), functioning as a virtual switch across associated hosts in enterprise network 12. In various embodiments, servers 26(1)-26(T) can host virtual machines (VMs) 28(1)-28(N), enabled by one or more Virtual Ethernet Modules (VEMs) 30(1)-30(M). For example, in various embodiments, server 26(1) is provisioned with VEM 30(1) that provides network capability to VM 28(1) and VM 28(2); and server 26(T) is provisioned with VEM 30(M) that provides networking capability to VM 28(N). Enterprise network 12 can provide VMs 28(1)-28(N) with computing, storage, and networking services for running application workloads. An "application workload" as used herein can be inclusive of an executable file comprising instructions that can be understood and processed on a computer, and may further include library modules loaded during execution, object files, system files, hardware logic, software logic, or any other executable modules.

DVS 24 can also span enterprise storage 31 for storing data, such as an enterprise storage server. Enterprise storage 31 can be any suitable memory element configured to store data. In various embodiments, VMs 28(1)-28(N) can store data in enterprise storage 31. As used herein, "data" includes any type of numeric, voice, video, or script data, or any type of source or object code, or any other suitable information in any appropriate format that may be communicated from one point to another in electronic devices and/or networks.

A virtual supervisor module (VSM) 32 can be provisioned in enterprise network 12 that controls VEMs 30(1)-30(M) as a virtual switch. VEMs 30(1)-30(M) can be configured through VSM 32 to perform Layer 2 switching and advanced networking functions, such as port-channels, quality of service (QoS), security (e.g., private virtual local area network (VLAN), port security, etc.), and monitoring (e.g., Netflow, switch port analyzer (SPAN), encapsulated remote SPAN, etc.). Network administrators can define configurations on all VEMs 30(1)-30(M) in enterprise network 12 from an interface, such as a vCenter 34 coupled to VSM 32. In various embodiments, vCenter 34 can be integrated with a server (not shown) that provides a console to operate and manage VSM 32. Together, DVS 24, VMs 28(1)-28(N), VEMs 30(1)-30(M), VSM 32, and vCenter 34 can form a virtual network.

A cloud manager 36 can provide a management platform (for example, in various embodiments, through a virtual machine) that runs in enterprise network 12. For example, in various embodiments, cloud manager 36 facilitates hybrid cloud operations in cloud 14, manages network resources in cloud 14 that are allocated to enterprise network 12, dynamically instantiates cloud gateway 20 and/or cloud gateway 22, performs various other management functions through an enterprise virtualization platform (for example, vCenter 34) and cloud provider application programming interfaces (APIs), various other management functions, or a combination thereof. Cloud manager 36 can also monitor health of substantially all components in enterprise network 12 and allocated resources in cloud 14, and provide high availability of such components based on particular needs.

In various embodiments, network resources of enterprise network 12 are extended into cloud 14 through a cloud Virtual Ethernet Module (cVEM) 42. cVEM 42 can be embedded in (or communicable with) cloud gateway 22 and can enable switching inter-virtual machine traffic at cloud 14. In various embodiments, cloud gateway 22 and cVEM 42 may together form a L2 switch. cVEM 42 can be configured to perform Layer 2 switching and advanced networking functions such as port-channels, quality of service (QoS), security (e.g., private virtual local area network (VLAN), port security, etc.), and monitoring (e.g., net-flow, switch port analyzer (SPAN), encapsulated remote SPAN, etc.). As used herein, the term "network resource" may encompass network elements, links (e.g., transmission connections between nodes in a network), and data, including computing resources (e.g., processors), and storage resources (e.g., storage devices, databases).

Virtual machines, such as VMs 40(1)-40(P), can be provisioned in cloud 14. In various embodiments, nested virtual machine containers (NVCs) can be provisioned in cloud 14 to host respective virtual machines, such as NVCs 44(1)-44(P) provisioned in cloud 14 to host respective VMs 40(1)-40(P). NVCs 44(1)-44(P) can provide a network overlay, for example, to facilitate computing, storage, and networking services for VMs 40(1)-40(P) running application workloads and connecting VMs 40(1)-40(P) with enterprise network 12 and, in various embodiments, with various components of cloud 14.

Cloud storage gateways, such as a cloud storage gateway (CSG) 46, can also be provisioned in cloud 14. In various embodiments, nested virtual machine containers are provisioned in cloud 14 to host respective cloud storage gateways, such as a nested virtual machine container (NVC) 50 to host cloud storage gateway 46. NVC 50 can provide a network overlay, for example, to facilitate cloud storage services provided by cloud storage gateway 46, as described in detail below. Such an overlay approach can provide several advantages in cloud security, cloud computing efficiency, and cloud interoperability areas over other hybrid cloud storage service solutions.

For purposes of illustrating the techniques of communication system 10, it is important to understand the communications in a given system such as the architecture shown in FIGURE 1. The following foundational information may be viewed as a basis from which the present disclosure may be properly explained. Such information is offered earnestly for purposes of explanation only and, accordingly, should not be construed in any way to limit the broad scope of the present disclosure and its potential applications.

As noted above, in various embodiments, enterprise network 12 and cloud 14 form a hybrid cloud network environment. A hybrid cloud is a cloud infrastructure that includes two or more clouds that interoperate and federate through technology. For example, clouds in a hybrid cloud can interact with one another to allow network resources to be moved from one cloud to another. In various implementations, for example, resources that are part of a hybrid cloud but hosted in different clouds can interact with one another across clouds to exchange data and move resources from one cloud to another. In various implementations, a hybrid cloud facilitates interaction between a private cloud (such as that provided by enterprise network 12) and a public cloud (such as that provided by cloud 14), where the private cloud can join the public cloud to utilize the public cloud's resources in a secure and scalable way. The hybrid cloud model can provide several advantages over other cloud models, including but not limited to: enterprises can protect their existing investment; enterprises can maintain control over their sensitive data and applications; enterprises can maintain full control over their network resources; enterprises can scale their environment on demand. For enterprises, such advantages can facilitate significant cost savings, rapid deployment of application workloads, and/or quick resource provisioning.

Hybrid cloud computing environments are particularly adept for providing storage services. Cloud users (such as enterprise network 12) can outsource data to a public could (such as cloud 14) using cloud storage services, thereby relieving the cloud users from burdens associated with data storage and maintenance. For example, commercial storage clouds, such as Amazon Simple Storage Service (Amazon S3) and Rackspace, demonstrate storage services in a hybrid cloud computing environment that provide a new, feasible computing paradigm by offering (almost) unlimited storage at very low prices yet with high availability. However, when implementing such hybrid cloud models, it is important to effectively mitigate risks that can often arise from using cloud storage services in a public cloud environment.

Data security presents several challenges when implementing hybrid cloud storage services. One challenge arises with hybrid cloud storage services ensuring data confidentiality, which includes ensuring that stored data remains private. Since cloud users typically have no control over cloud storage servers used by a cloud of a cloud provider, there exists an inherent risk of exposing data to third parties on the cloud or by the cloud provider itself. Another challenge arises with hybrid cloud storage services ensuring data integrity, which can include ensuring a certain degree of confidence that stored data is protected against accidental or intentional alteration. Since data should be properly encrypted both in motion (when transmitted) and at rest (when stored), there exists an additional risk of third parties on the cloud or the cloud provider itself tampering with stored data. The integrity of the data should be maintained in both motion and rest. Yet another challenge arises with hybrid cloud storage services ensuring data availability, which includes ensuring that cloud users can use and access stored data as anticipated. There is also a risk of third parties on the cloud or the cloud provider itself denying access to stored data. Hence, to fully realize advantages of hybrid cloud storage services, a hybrid cloud storage service solution should address safety, confidentiality, integrity, and availability of stored data in a way that is independent of the actual storage services.

Cloud mobility (also referred to as cloud service migration) - in various implementations, an ability to migrate data from enterprise network 12 to cloud 14, from cloud 14 back to enterprise network 12, or from cloud 14 to another cloud - also presents challenges when implementing hybrid cloud storage services. Complexities associated with cloud service migration result in many cloud users remaining with a cloud provider that may not meet their needs, just to avoid cumbersome cloud service migration processes. For example, to move data from one cloud provider's cloud environment to another cloud provider's cloud environment, hybrid cloud storage service models often necessitate, first, moving the data back to the cloud user's site (such as from cloud 14 back to enterprise network 12), and then, moving the data to the other cloud provider's cloud environment (such as from enterprise network 12 to a different cloud). Furthermore, the stored data may have been altered for compatibility with the original cloud provider's cloud environment, so that what is returned to the cloud user needs to be returned to its former state before it can be moved again. Such complexities result in cloud users fearing cloud vendor lock-in - where a cloud user cannot easily transition to various clouds. Cloud users often cite cloud vendor lock-in as a major impediment to adopting cloud storage services. Hence, to fully realize advantages of hybrid cloud storage services, a hybrid cloud storage service solution should avoid cloud vendor lock-in, accounting for cloud users that plan to migrate application workloads and/or data to multiple clouds, for example, by (1) transparently running in different clouds (for example, different public clouds, such as Amazon Elastic Compute Cloud (Amazon EC2), Verizon Terremark, and/or other public clouds) and/or (2) providing cloud vendor specific adapters for facilitating conversion and transfer of cloud user data into and out of cloud storage repositories of respective different clouds.

Cloud storage gateways have been implemented in hybrid cloud computing environments to address some of these hybrid cloud storage security and mobility issues. In typical hybrid cloud computing environments, a cloud storage gateway can be provisioned with a cloud user (for example, provisioned in enterprise 12), where the cloud storage gateway is a hardware- or software-based appliance (such as a network appliance or server) that resides at the cloud user's premises and allows incompatible technologies to communicate transparently. Unlike the cloud storage services offered by the cloud environments, which cloud storage gateways complement, cloud storage gateways can use standard network protocols, providing a seamless integration with existing cloud user (enterprise) applications. For example, the cloud storage gateway can translate cloud storage application program interfaces (APIs) (such as simple object access protocol (SOAP) or representational state transfer (REST) protocol) to block-based storage protocols (such as internet small computer system interface (iSCSI) protocol or Fibre Channel) or file-based interfaces (such as network file system (NFS) or common interface file (CIF) system), and vice versa. Further, cloud storage gateways can also provide additional storage features, including but not limited to, backup and recovery, caching, compression, encryption, deduplication, and provisioning.

While cloud storage gateways provide many features for integrating cloud users (such as enterprises) with storage services provided by cloud vendors, conventional cloud storage gateways still lack some features that would provide a hybrid cloud storage service solution that fully addresses the hybrid cloud storage security and mobility issues described herein. For example, one challenge with today's cloud storage gateway solutions arises because cloud storage gateways are not available at the cloud provider (e.g., at the cloud provider datacenter). Such configurations assume that VM resources running at the cloud of the cloud provider will directly interface with the cloud provider's storage services, implying that the cloud user (in other words, the enterprise) should change application workloads and/or data before migrating to the cloud. In another challenge, cloud storage gateway solutions typically intend for a cloud storage gateway to support a single cloud provider. For example, a cloud provider typically provides an associated cloud storage gateway to the cloud user, thereby promoting exclusive use of the cloud provider's storage services. Such situations lead to cloud vendor lock-in issues. Yet another challenge arises because cloud storage gateways typically do not support L2 networking, and thus, L2 network extension configurations. Instead, cloud storage gateway solutions assume that migrated application workloads and/or data will use different subnet addresses, again implying that the cloud user should change application workloads and/or data to fit into the cloud's network infrastructure. This hassle doubles when the cloud user (enterprise network) needs to move application workloads and/or data back to the enterprise network or to another cloud. Yet another challenge arises because typical cloud storage gateway solutions cannot address disaster recovery scenarios. For example, with all the changes needed to migrate application workloads and/or data back and forth between the enterprise network and different clouds using associated cloud storage gateways, it is difficult to envision a cloud storage service solution that can use conventional cloud storage gateway schemes as a base storage infrastructure for supporting disaster recovery in a hybrid cloud storage service solution.

Communication system 10 is configured to address the issues described above (and others) in offering a system and method for providing storage services in a cloud computing environment. Embodiments of communication system 10 can provide for managing cloud storage gateway 46 in cloud 14 and abstracting an interface that is transparent to cloud storage gateway 46. In FIGURE 1, NVC 50 runs on top of a cloud infrastructure (for example, on top of a public cloud infrastructure, such as cloud 14) and abstracts a transparent interface for cloud storage gateway 46. In various embodiments, NVC 50 is a virtual appliance deployed in cloud 14 as a virtual machine. For example, NVC 50 can be deployed as a hypervisor on cloud 14, such as a hypervisor on a virtual machine provided by the cloud service provider of cloud 14. NVC 50 can provide a hosting environment for cloud storage gateway 46, and/or execution support to cloud storage gateway 46, similar to an operating system hosting process. In various embodiments, NVC 50 can run within cloud 14 to facilitate migrating and running cloud storage gateway 46 within cloud 14. In various embodiments, NVC 50 can manage execution of cloud storage gateway 46, including but not limited, to launching cloud storage gateway 46; starting, stopping, and/or restarting cloud storage gateway 46; monitoring health of cloud storage gateway 46; providing resource utilization data relating to cloud storage gateway 46; providing console access to the cloud storage gateway 46; providing a uniform environment to cloud storage gateway 46; etc. NVC 50 can also serve as a protective barrier, monitoring interactions between cloud storage gateway 46 and other elements within the hybrid cloud environment.

The architecture of communication system 10 is intended to make cloud storage gateway 46 portable across multiple networks and cloud providers. For example, in various embodiments, NVC 50 hides the cloud infrastructure of cloud 14 from cloud storage gateway 46 and provides a uniform interface for providing processing elements (like CPU, memory, disk/storage, and network interface) to execute cloud storage gateway 46. For example, while NVC 50 may have to comply with an operating system of cloud 14, NVC 50 can support any operating system running on cloud storage gateway 46. In various embodiments, NVC 50 can abstract a hypervisor interface for executing (running) cloud storage gateway 46. In various implementations, NVC 50 can be built from standard operating systems from any public cloud, for seamless execution of cloud storage gateway 46 in various public cloud environments. In various embodiments, a same cloud storage gateway 46 (for example, a same cloud storage gateway image) can seamlessly execute on different clouds to facilitate storages services.

As used herein, the term "interface" includes a point of interaction between software components (e.g., applications, VMs, etc.) that allows access to computer resources such as memory, processors (such as central processing units), and storage. Interfaces can specify routines, data structures, object classes, exceptions, method signatures, peripheral register and interrupt definitions, core peripheral functions, signal processing algorithms, etc. Interfaces can include application programming interfaces and other languages and codes that applications use to communicate with each other and with the hardware of the computer system on which they reside. Interfaces may be specific to an operating system or hardware. For example, each operating system and/or processor may have a separate and distinct interface.

"Abstracting" the interface can include (but is not limited to) hiding implementation details of functionalities specified by the interface. "Abstracting" can also include removing, modifying, altering, replacing, or otherwise changing certain electronic elements associated with the interface. For example, in various implementations, NVC 50 can abstract the cloud network infrastructure of cloud 14 from cloud storage gateway 46 and provide enterprise VLANs and/or subnets network services to VMs (such as VM 40) running at the cloud 14 using a network overlay technology.

Turning to the infrastructure of communication system 10, the network topology can include any number of servers, VMs, DVSs, virtual routers, VSMs, and other nodes interconnected to form a large and complex network. A node may be any electronic device, client, server, peer, service, application, or other object capable of sending, receiving, or forwarding information over communications channels in a network. Elements of FIGURE 1 may be coupled to one another through one or more interfaces employing any suitable connection (wired or wireless), which provides a viable pathway for electronic communications. Additionally, any one or more of these elements may be combined or removed from the architecture based on particular configuration needs. Communication system 10 may include a configuration capable of TCP/IP communications for the electronic transmission or reception of data packets in a network. Communication system 10 may also operate in conjunction with a User Datagram Protocol/Internet Protocol (UDP/IP) or any other suitable protocol, where appropriate and based on particular needs. In addition, gateways, routers, switches, and any other suitable nodes (physical or virtual) may be used to facilitate electronic communication between various nodes in the network.

Note that the numerical and letter designations assigned to the elements of FIGURE 1 do not connote any type of hierarchy; the designations are arbitrary and have been used for purposes of teaching only. Such designations should not be construed in any way to limit their capabilities, functionalities, or applications in the potential environments that may benefit from the features of communication system 10. It should be understood that the communication system 10 shown in FIGURE 1 is simplified for ease of illustration. For example, enterprise network 12 and cloud 14 can include access switches, aggregation switches, core switches to aggregate and distribute ingress (upstream traffic), and egress (downstream traffic) traffic, etc. Switches (virtual and/or physical) can be provided at each access, aggregation, and core level to achieve redundancy within enterprise network 12. Further, cloud 14 can include elements particular to the type of network services provided; for example, in data centers that provide mass storage, cloud 14 can include Storage Area Networks (SANs).

The example network environment may be configured over a physical infrastructure that can include one or more networks and, further, can be configured in any form including, but not limited to, local area networks (LANs), wireless local area networks (WLANs), VLANs, metropolitan area networks (MANs), wide area networks (WANs), VPNs, Intranet, Extranet, any other appropriate architecture or system, or any combination thereof that facilitates communications in a network. In some embodiments, a communication link may represent any electronic link supporting a LAN environment such as, for example, cable, Ethernet, wireless technologies (e.g., IEEE 802.11x), ATM, fiber optics, etc. or any suitable combination thereof. In other embodiments, communication links may represent a remote connection through any appropriate medium (e.g., digital subscriber lines (DSL), telephone lines, T1 lines, T3 lines, wireless, satellite, fiber optics, cable, Ethernet, etc. or any combination thereof) and/or through any additional networks such as a wide area networks (e.g., the Internet).

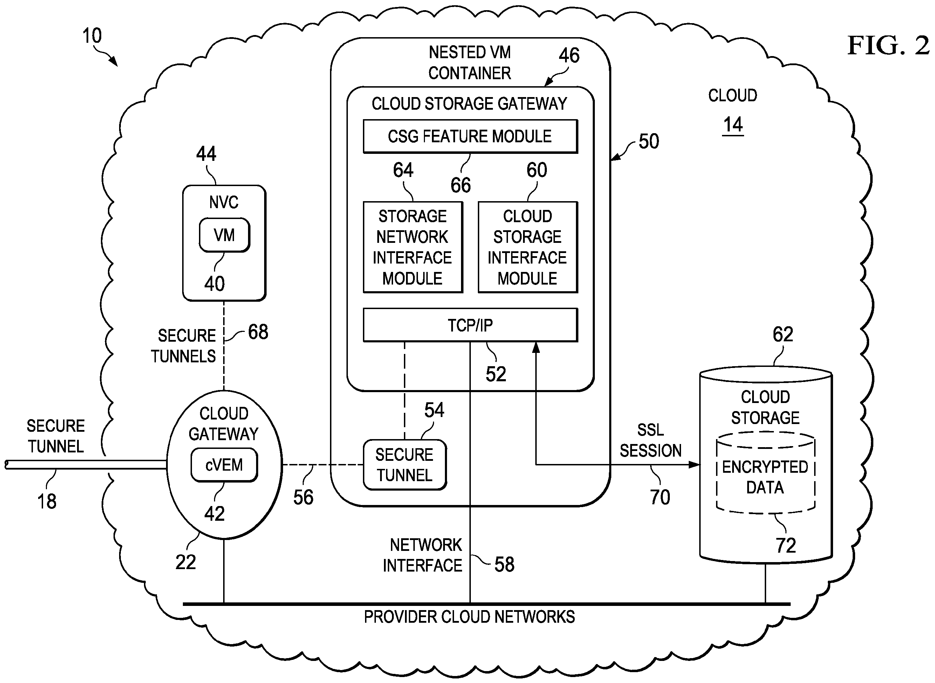

Turning to FIGURE 2, FIGURE 2 is a simplified schematic block diagram illustrating example details of an embodiment of communication system 10. Cloud storage gateway 46 and NVC 50 can be configured as depicted in FIGURE 2, such that cloud storage gateway 46 runs within NVC 50 in cloud 14 as described above. In various embodiments, cloud storage gateway 46 is a virtual appliance that provides the cloud storage services and data encryption services. For example, cloud storage gateway 46 can run (execute) as a virtual machine on NVC 50, such that cloud storage gateway 46 provides a virtualized cloud storage component for the hybrid cloud environment of communication system 10. Cloud storage gateway 46 can facilitate cloud storage services (for example, by accessing and managing data stored in enterprise network 12 and cloud 14) and data encryption services for various networks of communication system 10, including virtual machines residing at enterprise network 12 (such as VMs 28(1)-28(N)) and virtual machines residing at cloud 14 (such as VMs 40(1)-40(P)). In various implementations, cloud storage gateway 46 facilitates secure migration of data, such as that associated with a virtual machine (for example, VMs 28(1)-28(N) and/or VMs 40(1)-40(P)), between enterprise network 12 and cloud 14. For example, in various implementations, cloud storage gateway 46 can facilitate secure migration of data between enterprise storage 31 and cloud storage provided by cloud 14.

Cloud storage gateway 46 can include a TCP/IP stack 52 for supporting a routing domain for communication with enterprise network 12 and cloud 14. For example, in the depicted embodiment, TCP/IP stack 52 provides a network interface 58, such as a physical network interface, that enable cloud storage gateway 46 to communicate with enterprise network 12, cloud 14, various components of and/or external to enterprise network 12, various components of and/or external to cloud 14, or a combination thereof. In various embodiments, network interface 58 can be configured as a secure tunnel. TCP/IP stack 52 can include routing tables, default gateway, routing caches, and other relevant policies. In furtherance of the depicted embodiment, TCP/IP stack 52 can enable secure network connections between cloud storage gateway 46 and components running in enterprise network 12 and cloud 14. For example, a secure tunnel module 54 can operate in NVC 50 to enable secure communication of cloud storage gateway 46 with components of enterprise network 12 and cloud 14. For example, secure tunnel module 54 (such as an L2 network extension) can authenticate and set up a secure tunnel 56 (such as an L2 tunnel) with cVEM 42, such that communication from and to cloud storage gateway 46 can be routed through secure tunnel 56. In various embodiments, cloud storage gateway 46 can communicate with virtual machines residing at enterprise network 12 (for example, VMs 28(1)-28(N)) and cloud 14 (for example, VMs 40(1)-40(P)) over secure tunnel 56 to facilitate secure cloud storage services. In even furtherance of the depicted embodiment, TCP/IP stack 52 can enable secure socket layer (SSL) session network connections between cloud storage gateway 46 and components running in enterprise network 12 and cloud 14. For example, cloud storage gateway 46 can communicate with cloud storage (such as a cloud storage 62) via a SSL network session (such as a SSL session 70).

Cloud storage gateway 46 can include a cloud storage interface module 60 that enables cloud storage gateway 46 to manage and access storage components of cloud 14. In various embodiments, cloud storage gateway 46 manages and accesses cloud storage 62 via cloud storage interface module 60. For example, cloud storage interface module 60 includes a cloud storage adapter that is specific to cloud 14 so that cloud storage gateway 46 can manage and access cloud storage 62 with block-level APIs and/or object-based APIs. In various embodiments, cloud storage interface module 60 is enabled when cloud storage gateway 46 is deployed in cloud 14. Cloud storage 62 may be any suitable memory element configured to store data. As used herein, "data" includes any type of numeric, voice, video, or script data, or any type of source or object code, or any other suitable information in any appropriate format that may be communicated from one point to another in electronic devices and/or networks.

Cloud storage gateway 46 can provide storage services to enterprise 12 (for example, to VMs 28(1)-28(N)) and/or cloud 14 (for example, to VMs 40(1)-40(P)) via a storage network interface module 64. Storage network interface module 64 can include a standard storage protocol interface, such as a network data management protocol (NDMP) interface, a common internet file system (CIFS) interface, a network file system (NFS) interface, an internet small computer system (iSCSI), other interface, or combination thereof (which can collectively be referred to as a NDMP/CIFS/NFS/iSCSI interface). Consider an example involving one of the VMs 40(1)-40(P) hosted by corresponding NVC 44(1)-44(P), which is denoted in FIGURE 2 as VM 40 hosted by corresponding NVC 44, for purposes of explanation. In various embodiments, cloud storage gateway 46 supplies storage resources to VM 40 through storage network interface module 64, such that application workloads and/or data migrate over secure tunnel 56 (such as an L2 tunnel) set up by secure tunnel module 54 (such as an L2 network extension) and a secure tunnel 68. In various embodiments, secure tunnel 68 can be authenticated and set up with cVEM 42, for example, by a secure tunnel module (not shown) operating in NVC 44, such that communication from and to VM 40 can be routed through secure tunnel 68.

Cloud storage gateway 46 can include a cloud storage gateway (CSG) feature module 66 that provides data security features for maintaining data confidentiality, data integrity, and/or data availability of data stored on cloud 14. The data security features can include data encryption, data compression, data deduplication, data replication, other data security features, or a combination thereof. In various embodiments, CSG feature module 68 enables cloud storage gateway 46 to encrypt and decrypt application workloads and/or data migrating from virtual machines of enterprise 12 and/or cloud 14 (for example, VMs 28(1)-28(N) and/or VMs 40(1)-40(P), respectively) to cloud storage 62. Such data encryption feature can ensure data integrity of stored data while in motion and in rest. In various embodiments, the data encryption feature allows a cloud user to generate their own private encryption key(s). For example, enterprise network 12 can store and manage a private encryption key(s), and cloud storage gateway 46 can use the private encryption key(s) to encrypt data before it is stored at cloud storage 62. In such instances, cloud storage gateway 46 can provide the data encryption feature at the cloud 14.

The architecture of cloud storage gateway 46 is intended to facilitate data encryption services that can enhance cloud storage services of communication system 10. In various embodiments, cloud storage gateway 46 can intercept data from VM 40, relay the data to cloud storage 62 (for example, over a secure socket layer (SSL) session 70), apply an encryption function to the data, thereby generating encrypted data 72, and write the encrypted data 72 to cloud storage 62. In the reverse direction, in various embodiments, cloud storage gateway 46 can decrypt the encrypted data 72 before fulfilling a data request (such as a read request) from VM 40. In various embodiments, cloud storage gateway 46 acts as network-attached proxy server (NAS proxy server). For example, cloud storage gateway 46 can intercept cloud storage requests (for example, NDMP/CIFS/NFS/iSCSI requests) from VM 40 (which can be facilitated by storage network interface module 64), convert (translate) the cloud storage requests into corresponding cloud storage API messages (which can be facilitated by cloud storage interface module 60), and forward the corresponding cloud storage API messages to cloud storage 62. Before forwarding the cloud storage API messages, cloud storage gateway 46 can encrypt data portions of the messages (which can be facilitated by CSG feature module 66). Cloud storage gateway 46 can also receive cloud storage API messages from cloud storage 62 (such as reply messages). Cloud storage gateway 46 can convert (translate) the cloud storage API messages into cloud storage response messages (for example, NDMP/CIFS/NFS/iSCSI responses) and forward the cloud storage response messages to VM 40. Data embedded in the cloud storage API messages from cloud storage 62 can be decrypted by cloud storage gateway 46 before it is forwarded to VM 40.

The architecture of communication system 10 described above implements a hybrid cloud storage service solution that can seamlessly integrate third party storage vendors. For example, without the hybrid cloud storage service solution described herein, where the cloud storage gateway can be executed as a virtual machine on the nested virtual machine container provisioned within the cloud, development teams of both the cloud and the cloud storage gateway need to expose and share their intellectual property (IP) with each other. For example, in some situations, for a third party cloud storage gateway provider to integrate their cloud storage gateway product with an L2 network (and thus L2 network extensions) of a cloud, the third party cloud storage gateway provider may need to add an overly driver and configuration agent to their cloud storage gateway product. Further, to achieve a fully hybrid cloud storage service solution and integrate the third party storage gateway in public clouds having different hypervisor environments, the third party cloud storage gateway provider may need to disclose related IP with various partners of the hybrid cloud environment.

By implementing the hybrid cloud storage services solution (an NVC approach) described herein, both development teams can work independently and productize the hybrid cloud storage services solution by exchanging binary images. In various embodiments, a third party cloud storage gateway can be executed on a nested virtual machine container provisioned within the cloud, such that storage services of the third party cloud storage gateway are integrated through the nested virtual machine container (as opposed to just holding a third party storage gateway on top of the nested virtual machine container). As such, the third party cloud storage gateway does not need to be aware of its presence in the cloud, in precisely a same manner as integration occurs in various hypervisor environments (for example, a guest virtual machine instantiated in a hypervisor environment, such as a VMware ESX environment, does not need to know that its file format, such as VMDK, is globally replicated).

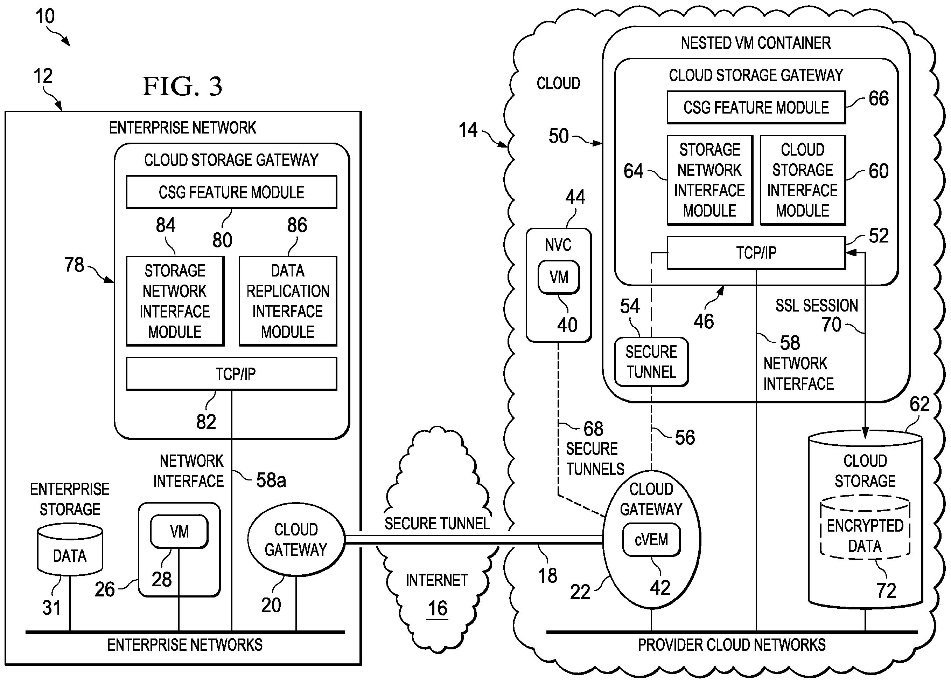

Turning to FIGURE 3, FIGURE 3 is a simplified schematic block diagram illustrating example details of an embodiment of communication system 10. In FIGURE 3, the cloud storage gateway architecture is intended to support disaster recovery in a hybrid cloud network environment. For example, cloud 14 can be a public cloud used to provide disaster recovery for a private cloud, such as enterprise network 12. Enterprise network 12 can include a cloud storage gateway 78, which can be provisioned as a virtual machine in enterprise network 12. In various embodiments, cloud storage gateway 78 is deployed in enterprise network 12 in an un-nested environment, such that cloud storage gateway 78 does not run within a nested virtual container. Cloud storage gateway 78 can be similar in some ways to cloud storage gateway 46. For example, cloud storage gateway 78 can include a cloud storage gateway (CSG) feature module 80 similar to CSG feature module 66, a TCP/IP stack 82 similar to TCP/IP stack 52, a storage network interface module 84 similar to storage interface module 64, and a cloud storage interface module 86 similar to cloud storage interface module 60. In various implementations, CSG feature module 80 and CSG feature module 66 facilitate a data replication process, such that data can be moved between enterprise network 12 and cloud 14. In various embodiments, virtual machines located in enterprise network 12 and cloud 14 (for example, VMs 28(1)-28(N) and/or VMs 40(1)-40(P), respectively) can use a same data set provided by, respectively, cloud storage gateway 46 and cloud storage gateway 78 running cloud storage services and data encryption services as described herein.

In various disaster recovery and data backup implementations, infrastructures (such as various systems, networks, etc.) of enterprise network 12 can recover from failure using cloud storage gateway 46. For example, cloud storage gateway 46 running in cloud 14 can restore data to enterprise storage 31 through cloud storage gateway 78 running in enterprise network 12. Data can thus be migrated from cloud storage 62 to enterprise storage 31 using the depicted cloud storage gateway architecture. In various implementations, once data in enterprise storage 31 and cloud storage 62 are synchronized, an application workload (such as that run by VM 28) can be re-instantiated at enterprise network 12. In various implementations, the application workload running at VM 28 can take over an application workload running at VM 40, which can then be shut down, for example, to realize cloud service expense savings.

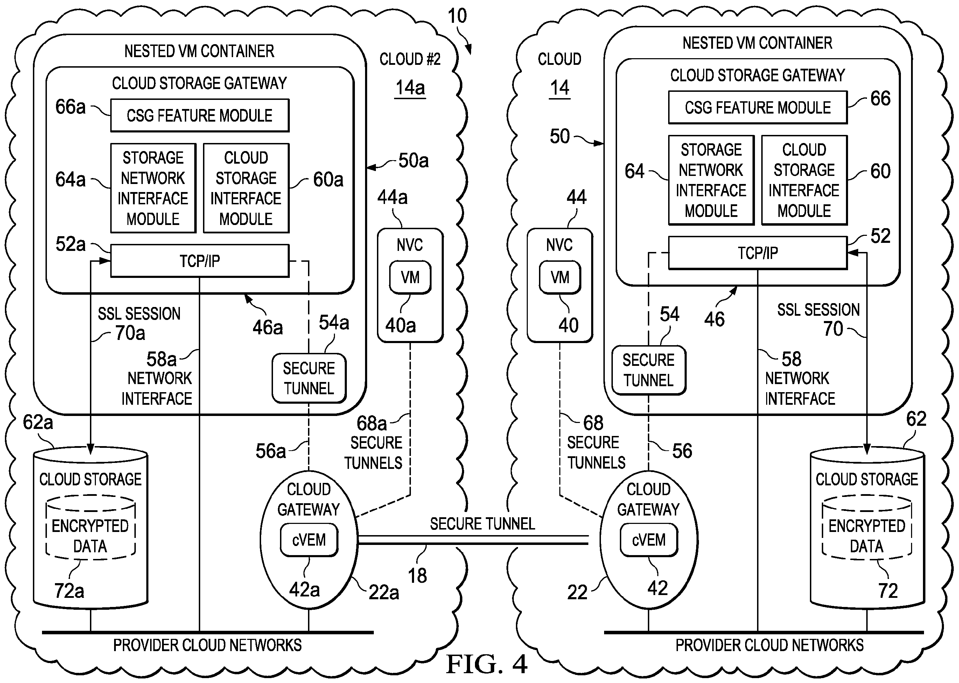

Turning to FIGURE 4, FIGURE 4 is a simplified schematic block diagram illustrating example details of an embodiment of communication system 10. In FIGURE 4, cloud storage gateway architecture is intended to support inter-cloud data migration in a hybrid cloud network environment. For example, in various embodiments, cloud 14 communicates with a cloud 14a over a public network, such as Internet 16, via secure tunnel 18. In various embodiments, cloud 14 and cloud 14a form a hybrid cloud network environment. Cloud 14a is similar to cloud 14. For example, in various embodiments, cloud 14a can include a cloud gateway 22a similar to cloud gateway 22; a VM 40a similar to VM 40; a cVEM 42a similar to cVEM42; a NVC 44a similar to NVC 44; a cloud storage gateway 46a that can execute in a NVC 50a similar to cloud storage gateway 46 that can execute in NVC 50, which includes a TCP/IP stack 52a (similar to TCP/IP stack 52), a cloud storage interface module 60a (similar to CSG interface module 60), a storage network interface module 62a (similar to storage interface module 62), and a cloud storage gateway feature module 64a (similar to cloud storage gateway feature module 64); a secure tunnel module 54a similar to secure tunnel module 54; and cloud storage 62a for storing encrypted data 68a similar to cloud storage 62 for storing encrypted data 68. Cloud 14a can also provide communications via secure tunnel 56a (similar to secure tunnel 56), network interface 58a (similar to network interface 58), and secure tunnel 66a (similar to secure tunnel 66).

Cloud storage gateway 46 and cloud storage gateway 46a can facilitate secure data migration between cloud 14 and cloud 14a. In various embodiments, cloud storage gateway 46 can forward data from cloud storage 62 to cloud storage gateway 46a, which can then be stored at cloud storage 62a. In various embodiments, cloud storage gateway 46a can forward data from cloud storage 62a to cloud storage gateway 46, which can then be stored at cloud storage 62. Cloud storage gateway 46 and cloud storage gateway 46a can implement a data replication protocol (for example, using CSG feature module 66 and CSG feature module 66a, respectively) to migrate data between cloud 14 and cloud 14a.

In various implementations, the cloud storage gateway architecture depicted can support disaster recovery and data backup between cloud 14 and cloud 14a. In a situation where cloud 14 has an infrastructure failure, infrastructures (such as various systems, networks, etc.) of cloud 14 can recover from failure using cloud storage gateway 46a. For example, cloud storage gateway 46a running in cloud 14a can restore data to cloud storage 62 through cloud storage gateway 46 running in cloud 14. Data can thus be migrated from cloud storage 62a to cloud storage 62 using the depicted cloud storage gateway architecture. In various implementations, once data in cloud storage 62 and cloud storage 62a are synchronized, an application workload (such as that run by VM 40) can be re-instantiated at cloud 14. In various implementations, the application workload running at VM 40 can take over an application workload running at VM 40a, which can then be shut down, for example, to realize cloud service expense savings. Such scenario can also be implemented for recovering cloud 14a from failures.

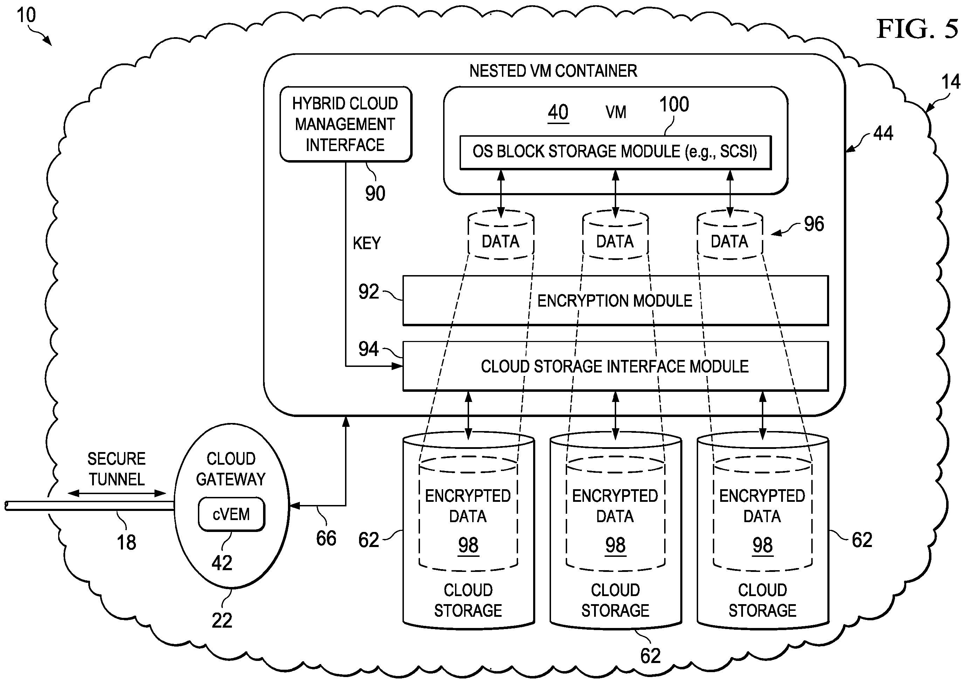

Turning to FIGURE 5, FIGURE 5 is a simplified schematic block diagram illustrating example details of an embodiment of communication system 10. In FIGURE 5, nested virtual container architecture as described herein is intended to support directly attached storage for virtual machines in a hybrid cloud network environment. In various implementations, communication system 10 implements the nested virtual machine container architecture to support confidentiality and secrecy of directly attached storage for a virtual machine in a public cloud environment without requiring any additional alteration or configuration of storage volumes and storage management configurations expected by the virtual machine's operating system and storage management modules. The virtual machine can either be executing enterprise application workloads or be a dedicated storage appliance acting as a storage gateway for other VMs, all of which are part of the secure hybrid cloud network environment. As above, NVC 44 can be provisioned in cloud 14 to host VM 40. In various embodiments, VM 40 can be deployed within NVC 44 as a nested VM (NVM). NVC 44 can provide a network overlay, for example, to facilitate computing, storage, and networking services for VM 40 running application workloads or providing storage services, and connect VM 40 with enterprise network 12 and, in various embodiments, with various components of cloud 14.

In various embodiments, NVC 44 can include a hybrid cloud management interface module 90, an encryption module 92, and a cloud storage interface module 94. Hybrid cloud management interface module 90 can enable NVC 44 to obtain storage configuration information associated with VM 40, for example, from cloud manager 36 of enterprise network 12. In various embodiments, hybrid cloud management interface module 90 can enable NVC 44 to obtain a key for encrypting data before storing at cloud 14. For example, in various embodiments, cloud manager 36 can securely deliver a private encryption key(s) to NVC 44 via secure tunnel 18 and secure tunnel 66, and NVC 44 can use the private encryption key(s) to configure encryption module 92 to encrypt data before storage at cloud 14. In various embodiments, encryption module 92 enables NVC 44 to encrypt data associated with VM 40 with an encryption key, as it migrates from enterprise network 12 to cloud 14. Cloud storage interface module 94 can enable NVC 44 to manage and access storage components of cloud 14. In various embodiments, NVC 44 manages and accesses cloud storage 62 using cloud storage interface module 94. For example, cloud storage interface module 94 includes a cloud storage adapter that is specific to cloud 14 so that NVC 44 can manage and access cloud storage 62 with block-level APIs and/or object-based APIs.

NVC 44 can hide a cloud infrastructure and/or cloud interfaces of cloud 14 from VM 40 and provide a transparent, uniform interface that for providing local, directly attached storage (such as VM storage 96) to VM 40 in cloud 14. In various embodiments, NVC 44 can provide locally attached storage for VM 40 across different clouds. For example, in various embodiments, to achieve directly attached storage, when VM 40 is migrated to NVC 44 in cloud 14, NVC 44 obtains storage configuration information associated with VM 40, for example, from cloud manager 36 (for example, through secure tunnel 18 and secure tunnel 66) via hybrid cloud management interface 90. NVC 44 can create VM storage 96, which can include data associated with VM 40. In various embodiments, NVC 44 can use storage provisioning APIs exposed by a cloud provider of cloud 14 (for example, using cloud storage interface module 94) to create VM storage 96. In various embodiments, NVC 44 can populate VM storage 96 with data migrated from enterprise network 12. In various embodiments, VM storage 96 can include memory allocated by NVC 44 to VM 40.

NVC 44 can encrypt VM storage 96 using encryption module 92, thereby generating encrypted data 98, and forward encrypted data 98 to cloud storage 68. In various embodiments, NVC 44 can encrypt VM storage 96 using a key managed by cloud manager 36, which is delivered to hybrid cloud management interface 90. NVC 44 can then expose encrypted data 98 to VM 40 as locally, directly attached storage. In various implementations, NVC 33 exposes encrypted data 98 to VM 40 as plain text data in locally, directly attached storage volumes.

VM 40 can include an operating system (OS) block storage module 100 (such as a small computer system interface (SCSI)) that enables access to data contained in the directly attached storage volumes (VM storage 96). OS block storage module 100, along with associated configuration contained within VM 40, does not require any modifications since VM 40 can be seamlessly migrated between various clouds so long as VM 40 is encapsulated within NVC 44. In various embodiments, NVC 44 maps cloud storage 62 and encrypted data within cloud storage 62 in a transparent fashion to VM 40, such that OS block storage module 100 can access encrypted data 98 without having to implement any encryption logic or cloud specific storage interface logic. In various embodiments, OS block storage module 100 can enable VM 40 to store data at VM storage 96, which can then be encrypted by NVC 44 and forwarded to cloud storage 68, as described above. By NVC 44 directly attaching storage to VM 40, upon VM 40 being migrated to cloud 14, the architecture of communication system 10 can ensure that VM 40 automatically gains access to its previous directly attached storage configuration (for example, that configured at enterprise network 12), without using any storage related reconfiguration. Further, since NVC 44 encrypts the data presented (exposed) to VM 40, directly attached storage can be protected against data loss in the hybrid cloud environment.

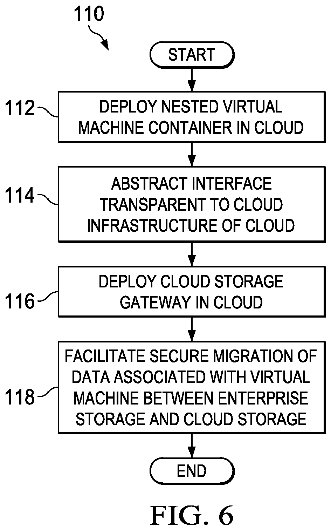

Turning to FIGURE 6, FIGURE 6 is a simplified flow diagram illustrating example operations 110 that can be associated with implementing storage provisioning for a virtual machine in communication system 10. Operations 110 can include deploying a nested virtual machine container in a cloud at block 112. For example, in various embodiments, NVC 44 can be deployed in cloud 14. At block 114, an interface can be abstracted that is transparent to a cloud infrastructure of the cloud. For example, in various embodiments, NVC 44 can abstract an interface that is transparent to cloud infrastructure of cloud 14, for example, for a cloud storage gateway. The interface can be a hypervisor interface for executing the cloud storage gateway. At block 116, a cloud storage gateway can be deployed in the cloud. For example, in various embodiments, cloud storage gateway 46 can be deployed in NVC 44. At block 118, cloud storage gateway can facilitate secure migration of data between a virtual machine and cloud storage in the cloud. For example, in various embodiments, cloud storage gateway 46 facilitates secure migration of data between VM 40 and cloud storage 62 in cloud 14.

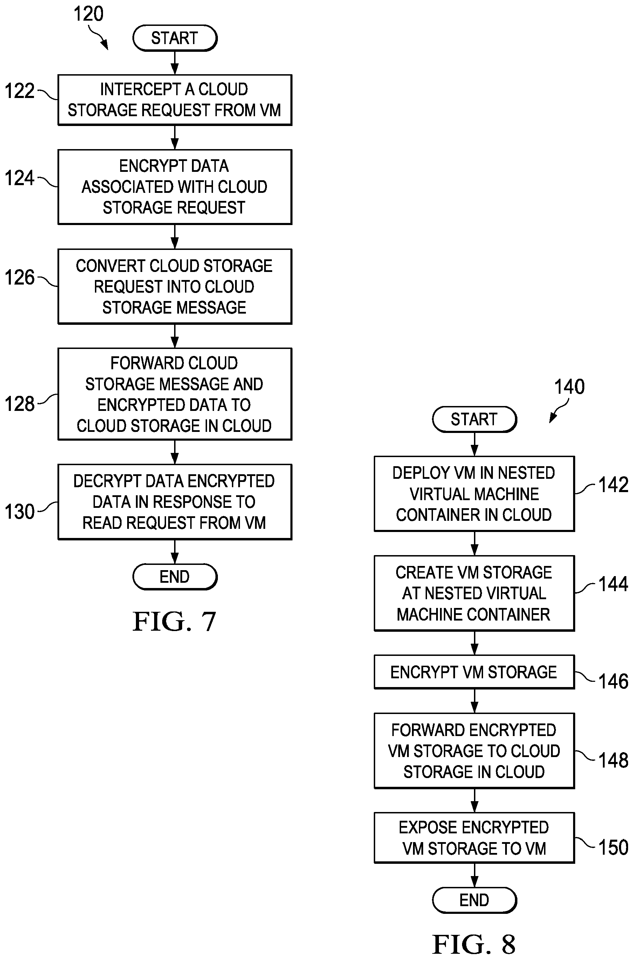

Turning to FIGURE 7, FIGURE 7 is a simplified flow diagram illustrating example storage operations 120 that can be associated with a cloud storage gateway, such as storage operations associated with provisioning storage for a virtual machine in a cloud. Operations 120 can include intercepting a cloud storage request from a virtual machine at block 122. For example, in various embodiments, cloud storage gateway 46 can intercept a cloud storage request from VM 40. At block 124, data associated with the cloud storage request can be encrypted, for example, by the cloud storage gateway 46 before storing in cloud storage 62. At block 126, the cloud storage request can be converted into a cloud storage message. For example, in various embodiments, cloud storage gateway 46 converts the cloud storage request into a cloud storage message suitable for communicating with cloud storage 62. At block 128, the cloud storage message and encrypted data can be forwarded to cloud storage, such as cloud storage 62, from a cloud storage gateway, such as cloud storage gateway 46. At block 130, the encrypted data can be decrypted (for example, by cloud storage gateway 46) in response to a read request from the virtual machine, such as VM 40.

Turning to FIGURE 8, FIGURE 8 is a simplified flow diagram illustrating example operations 140 that can be associated with implementing storage provisioning for a virtual machine in communication system 10. Operations 140 can begin with deploying a virtual machine in a nested virtual machine container in a cloud. For example, VM 40 can be deployed in NVC 44 provisioned in cloud 14. At block 144, VM storage can be created at nested virtual machine container. For example, in various embodiments, NVC 44 creates VM storage 96. At block 146 and block 148, operations 140 can include encrypting VM storage and forwarding the encrypted VM storage to cloud storage in the cloud. For example, NVC 44 can encrypt VM storage 98, thereby forwarding encrypted data 98 for storage in cloud storage 62 of cloud 14. At block 150, the encrypted VM storage can be exposed to the virtual machine. For example, in various embodiments, NVC 44 can expose encrypted data 98 to VM 40, thereby providing directly attached storage for VM 40 in cloud 14.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments.

In example implementations, at least some portions of the activities outlined herein may be implemented in software in, for example, cloud storage gateway 46 and NVC 50. In some embodiments, one or more of these features may be implemented in hardware, provided external to these elements, or consolidated in any appropriate manner to achieve the intended functionality. The various network elements (e.g., NVC 44, NVC 50, cloud storage gateway 46, and cloud storage gateway 80) may include software (or reciprocating software) that can coordinate in order to achieve the operations as outlined herein. In still other embodiments, these elements may include any suitable algorithms, hardware, software, components, modules, interfaces, or objects that facilitate the operations thereof.

Furthermore, NVC 44, NVC 50, cloud storage gateway 46, cloud storage gateway 80, and other components of communication system 10 described and shown herein (and/or their associated structures) may also include suitable interfaces for receiving, transmitting, and/or otherwise communicating data or information in a network environment. Additionally, some of the processors and memory elements associated with the various nodes may be removed, or otherwise consolidated such that a single processor and a single memory element are responsible for certain activities. In a general sense, the arrangements depicted in the FIGURES may be more logical in their representations, whereas a physical architecture may include various permutations, combinations, and/or hybrids of these elements. It is imperative to note that countless possible design configurations can be used to achieve the operational objectives outlined here. Accordingly, the associated infrastructure has a myriad of substitute arrangements, design choices, device possibilities, hardware configurations, software implementations, equipment options, etc.

In some of example embodiments, one or more memory elements can store data used for the operations described herein. This includes the memory element being able to store instructions (e.g., software, logic, code, etc.) in non-transitory media, such that the instructions are executed to carry out the activities described in this Specification. A processor can execute any type of instructions associated with the data to achieve the operations detailed herein in this Specification. In one example, processors could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read only memory (EPROM), an electrically erasable programmable read only memory (EEPROM)), an ASIC that includes digital logic, software, code, electronic instructions, flash memory, optical disks, CD-ROMs, DVD ROMs, magnetic or optical cards, other types of machine-readable mediums suitable for storing electronic instructions, or any suitable combination thereof.

In operation, components in communication system 10 can include one or more memory elements for storing information to be used in achieving operations as outlined herein. These devices may further keep information in any suitable type of non-transitory storage medium (e.g., random access memory (RAM), read only memory (ROM), field programmable gate array (FPGA), erasable programmable read only memory (EPROM), electrically erasable programmable ROM (EEPROM), etc.), software, hardware, or in any other suitable component, device, element, or object where appropriate and based on particular needs. The information being tracked, sent, received, or stored in communication system 10 could be provided in any database, register, table, cache, queue, control list, or storage structure, based on particular needs and implementations, all of which could be referenced in any suitable timeframe. Any of the memory items discussed herein should be construed as being encompassed within the broad term "memory element." Similarly, any of the potential processing elements, modules, and machines described in this Specification should be construed as being encompassed within the broad term "processor."

It is also important to note that the operations and steps described with reference to the preceding FIGURES illustrate only some of the possible scenarios that may be executed by, or within, the system. Some of these operations may be deleted or removed where appropriate, or these steps may be modified or changed considerably without departing from the scope of the discussed concepts. In addition, the timing of these operations may be altered considerably and still achieve the results taught in this disclosure. The preceding operational flows have been offered for purposes of example and discussion. Substantial flexibility is provided by the system in that any suitable arrangements, chronologies, configurations, and timing mechanisms may be provided without departing from the teachings of the discussed concepts.

Although the present disclosure has been described in detail with reference to particular arrangements and configurations, these example configurations and arrangements may be changed significantly without departing from the scope of the present disclosure. For example, although the present disclosure has been described with reference to particular communication exchanges involving certain network access and protocols, communication system 10 may be applicable to other exchanges or routing protocols. Moreover, although communication system 10 has been illustrated with reference to particular elements and operations that facilitate the communication process, these elements, and operations may be replaced by any suitable architecture or process that achieves the intended functionality of communication system 10.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

## Claims

1. A method, comprising:
implementing storage provisioning for a virtual machine in a hybrid cloud environment that includes an enterprise network in communication with a cloud, wherein the enterprise network includes enterprise storage and the cloud includes cloud storage, and further wherein the implementing includes:
deploying (116) a cloud storage gateway in the cloud, wherein the cloud storage gateway facilitates (118) secure migration of data associated with the virtual machine between the enterprise storage and the cloud storage; and
deploying (112) a nested virtual machine container, NVC, in the cloud, wherein the nested virtual machine container abstracts an interface that is transparent to a cloud infrastructure of the cloud (114);
wherein deploying the cloud storage gateway in the cloud includes executing the cloud storage gateway as a virtual machine within the nested virtual machine container.

2. The method of Claim 1, wherein the NVC abstracts a hypervisor interface for executing the cloud storage gateway.

3. The method of Claim 1, wherein the facilitating secure migration of data between the enterprise storage and the cloud storage includes:
intercepting a cloud storage request from the virtual machine;
converting the cloud storage request into a cloud storage message;
encrypting data associated with the cloud storage message; and
forwarding the cloud storage message and associated encrypted data to the cloud storage.

4. The method of Claim 3, wherein the facilitating secure migration of data between the enterprise storage and the cloud storage further includes:
intercepting a cloud storage response message from the cloud storage;
converting the cloud storage response message into a cloud storage response;
decrypting data associated with the cloud storage response; and
forwarding the cloud storage response and associated decrypted data to the virtual machine.

5. The method of Claim 1, wherein the facilitating secure migration of data between the enterprise storage and the cloud storage includes providing a secure tunnel between the virtual machine and the cloud storage gateway in the cloud.

6. The method of Claim 1, further comprising deploying a cloud storage gateway in the enterprise network, wherein the cloud storage gateways facilitate disaster recovery for the enterprise network.

7. The method of claim 1, further comprising deploying another cloud storage gateway in another cloud in communication with the cloud, wherein the cloud storage gateways facilitate data migration between the clouds.

8. The method of Claim 1, wherein the implementing further includes:
deploying the virtual machine in a nested virtual machine container in the cloud, wherein the nested virtual machine container abstracts an interface that is transparent to a cloud infrastructure of the cloud; and
directly attaching storage to the virtual machine.

9. The method of Claim 8, wherein the directly attaching storage to the virtual machine includes:
creating virtual machine storage at the nested virtual machine container;
encrypting the virtual machine storage; and
forwarding the encrypted virtual machine storage to cloud storage in the cloud.

10. Logic encoded in non-transitory media that includes instructions for execution and when executed by a processor, is operable to perform operations comprising a method according to any preceding claim.

11. A system (10) for providing storage services in a cloud environment, the system comprising:
an enterprise network (12) in communication with a cloud (14), wherein the enterprise network (12) includes enterprise storage (31) and the cloud (14) includes cloud storage (62); and
wherein the system (10) is configured for performing a method according to any of claims 1 to 9.

## Patentansprüche

1. Verfahren, das Folgendes umfasst:
Implementieren der Speicherbereitstellung für eine virtuelle Maschine in einer Hybrid-Cloud-Umgebung, die ein Unternehmensnetzwerk in Kommunikation mit einer Cloud umfasst, wobei das Unternehmensnetzwerk einen Unternehmensspeicher umfasst und die Cloud einen Cloud-Speicher umfasst und ferner wobei die Implementierung Folgendes umfasst:
Einrichten (116) eines Cloud-Speicher-Gateways in der Cloud, wobei das Cloud-Speicher-Gateway eine sichere Migration von Daten (118) bereitstellt, die mit der virtuellen Maschine zwischen dem Unternehmensspeicher und dem Cloud-Speicher verknüpft sind; und
Einrichten (112) eines verschachtelten Containers einer virtuellen Maschine (Virtual Machine Container, NVC) in der Cloud, wobei der verschachtelte Container der virtuellen Maschine eine Schnittstelle abstrahiert, die für eine Cloud-Infrastruktur der Cloud (114) transparent ist;
wobei das Einrichten des Cloud-Speicher-Gateways in der Cloud das Ausführen des Cloud-Speicher-Gateways als eine virtuelle Maschine innerhalb des verschachtelten Containers der virtuellen Maschine umfasst.

2. Verfahren nach Anspruch 1, wobei der NVC eine Hypervisor-Schnittstelle zum Ausführen des Cloud-Speicher-Gateways abstrahiert.

3. Verfahren nach Anspruch 1, wobei die Bereitstellung der sicheren Migration von Daten zwischen dem Unternehmensspeicher und dem Cloud-Speicher Folgendes umfasst:
Abfangen einer Cloud-Speicheranforderung von der virtuellen Maschine;
Umwandeln der Cloud-Speicheranforderung in eine Cloud-Speichernachricht;
Verschlüsseln von Daten, die der Cloud-Speichernachricht zugeordnet sind und
Weiterleiten der Cloud-Speichernachricht und der zugeordneten verschlüsselten Daten an den Cloud-Speicher.

4. Verfahren nach Anspruch 3, wobei die Bereitstellung der sicheren Migration von Daten zwischen dem Unternehmensspeicher und dem Cloud-Speicher ferner Folgendes umfasst:
Abfangen einer Cloud-Speicherantwortnachricht von dem Cloud-Speicher;
Umwandeln der Cloud-Speicherantwortnachricht in eine Cloud-Speicherantwort;
Entschlüsseln von Daten, die der Cloud-Speicherantwort zugeordnet sind; und
Weiterleiten der Cloud-Speicherantwort und der zugeordneten entschlüsselten Daten an die virtuelle Maschine.

5. Verfahren nach Anspruch 1, wobei das Bereitstellen der sicheren Migration von Daten zwischen dem Unternehmensspeicher und dem Cloud-Speicher das Bereitstellen eines sicheren Tunnels zwischen der virtuellen Maschine und dem Cloud-Speicher-Gateway in der Cloud umfasst.

6. Verfahren nach Anspruch 1, das ferner das Einrichten eines Cloud-Speicher-Gateways in dem Unternehmensnetzwerk umfasst, wobei die Cloud-Speicher-Gateways die Notfallwiederherstellung für das Unternehmensnetzwerk bereitstellen.

7. Verfahren nach Anspruch 1, das ferner das Einrichten eines anderen Cloud-Speicher-Gateways in einer anderen Cloud in Kommunikation mit der Cloud umfasst, wobei die Cloud-Speicher-Gateways die Datenmigration zwischen den Clouds bereitstellen.

8. Verfahren nach Anspruch 1, wobei die Implementierung ferner Folgendes umfasst:
Einrichten der virtuellen Maschine in einem verschachtelten Container einer virtuellen Maschine in der Cloud, wobei der verschachtelte Container der virtuellen Maschine eine Schnittstelle abstrahiert, die für eine Cloud-Infrastruktur der Cloud transparent ist; und
direktes Anbringen des Speichers an die virtuelle Maschine.

9. Verfahren nach Anspruch 8, wobei das direkte Anbringen des Speichers an der virtuellen Maschine Folgendes umfasst:
Erstellen eines Speichers einer virtuellen Maschine in dem verschachtelten Container der virtuellen Maschine;
Verschlüsseln des Speichers der virtuellen Maschine; und
Weiterleiten des verschlüsselten Speichers der virtuellen Maschine an den Cloud-Speicher in der Cloud.

10. Logik, die in nicht-transitorischen Medien codiert ist und Anweisungen für die Ausführung umfasst und wenn sie von einem Prozessor ausgeführt wird, dafür ausgelegt ist, Operationen durchzuführen, die ein Verfahren nach einem der vorhergehenden Ansprüche umfassen.

11. System (10) zum Bereitstellen von Speicherdiensten in einer Cloud-Umgebung, wobei das System Folgendes umfasst:
ein Unternehmensnetzwerk (12), das mit einer Cloud (14) in Verbindung steht, wobei das Unternehmensnetzwerk (12) einen Unternehmensspeicher (31) umfasst und die Cloud (14) einen Cloud-Speicher (62) umfasst; und
wobei das System (10) zur Durchführung eines Verfahrens nach einem der Ansprüche 1 bis 9 konfiguriert ist.

## Revendications

1. Procédé, comportant :
l'étape consistant à mettre en oeuvre une mise à disposition de stockage pour une machine virtuelle dans un environnement à nuages hybrides qui comprend un réseau d'entreprise en communication avec un nuage, dans lequel le réseau d'entreprise comprend un stockage d'entreprise et le nuage comprend un stockage infonuagique, et par ailleurs dans lequel l'étape consistant à mettre en oeuvre comprend les étapes consistant à :
déployer (116) une passerelle de stockage infonuagique dans le nuage, dans lequel la passerelle de stockage infonuagique facilite (118) une migration sécurisée de données associées à la machine virtuelle entre le stockage d'entreprise et le stockage infonuagique ; et
déployer (112) un NVC (nested virtual machine container - conteneur imbriqué de machine virtuelle) dans le nuage, dans lequel le conteneur imbriqué de machine virtuelle effectue l'abstraction d'une interface qui est transparente par rapport à une infrastructure infonuagique du nuage (114) ;
dans lequel l'étape consistant à déployer la passerelle de stockage infonuagique dans le nuage comprend l'étape consistant à exécuter la passerelle de stockage infonuagique sous la forme d'une machine virtuelle dans les limites du conteneur imbriqué de machine virtuelle.

2. Procédé selon la revendication 1, dans lequel le NVC effectue l'abstraction d'une interface d'hyperviseur à des fins d'exécution de la passerelle de stockage infonuagique.

3. Procédé selon la revendication 1, dans lequel l'étape consistant à faciliter la migration sécurisée de données entre le stockage d'entreprise et le stockage infonuagique comprend les étapes consistant à :
intercepter une demande de stockage infonuagique en provenance de la machine virtuelle ;
convertir la demande de stockage infonuagique en un message de stockage infonuagique ;
chiffrer les données associées au message de stockage infonuagique ; et
réacheminer le message de stockage infonuagique et les données chiffrées associées au stockage infonuagique.

4. Procédé selon la revendication 3, dans lequel l'étape consistant à faciliter la migration sécurisée de données entre le stockage d'entreprise et le stockage infonuagique comprend par ailleurs les étapes consistant à :
intercepter un message de réponse de stockage infonuagique en provenance du stockage infonuagique ;
convertir le message de réponse de stockage infonuagique en une réponse de stockage infonuagique ;
déchiffrer les données associées à la réponse de stockage infonuagique ; et
réacheminer la réponse de stockage infonuagique et les données déchiffrées associées jusqu'à la machine virtuelle.

5. Procédé selon la revendication 1, dans lequel l'étape consistant à faciliter la migration sécurisée de données entre le stockage d'entreprise et le stockage infonuagique comprend l'étape consistant à mettre en oeuvre un tunnel sécurisé entre la machine virtuelle et la passerelle de stockage infonuagique dans le nuage.

6. Procédé selon la revendication 1, comportant par ailleurs l'étape consistant à déployer une passerelle de stockage infonuagique dans le réseau d'entreprise, dans lequel les passerelles de stockage infonuagique facilitent toute reprise après sinistre pour le réseau d'entreprise.

7. Procédé selon la revendication 1, comportant par ailleurs l'étape consistant à déployer une autre passerelle de stockage infonuagique dans un autre nuage en communication avec le nuage, dans lequel les passerelles de stockage infonuagique facilitent la migration de données entre les nuages.

8. Procédé selon la revendication 1, dans lequel l'étape consistant à mettre en oeuvre comprend par ailleurs les étapes consistant à :
déployer la machine virtuelle dans un conteneur imbriqué de machine virtuelle dans le nuage, dans lequel le conteneur imbriqué de machine virtuelle effectue l'abstraction d'une interface qui est transparente par rapport à une infrastructure infonuagique du nuage ; et
attacher directement un stockage à la machine virtuelle.

9. Procédé selon la revendication 8, dans lequel l'étape consistant à attacher directement un stockage à la machine virtuelle comprend les étapes consistant à :
créer un stockage de machine virtuelle au niveau du conteneur imbriqué de machine virtuelle ;
chiffrer le stockage de machine virtuelle ; et
réacheminer le stockage de machine virtuelle chiffré jusqu'au stockage infonuagique dans le nuage.

10. Logique codée dans un support non transitoire qui comprend des instructions à des fins d'exécution et logique qui, quand elle est exécutée par un processeur, sert à effectuer des opérations comportant un procédé selon l'une quelconque des revendications précédentes.

11. Système (10) servant à des fins de mise en oeuvre de services de stockage dans un environnement à nuages, le système comportant :
un réseau d'entreprise (12) en communication avec un nuage (14), dans lequel le réseau d'entreprise (12) comprend un stockage d'entreprise (31) et le nuage (14) comprend un stockage infonuagique (62) ; et
dans lequel le système (10) est configuré pour effectuer un procédé selon l'une quelconque des revendications 1 à 9.
